# EUROPEAN PATENT APPLICATION

(11) **EP 4 316 761 A2**
(43) Date of publication of application: **07.02.2024**
(21) Application number: 23183311.2
(22) Date of filing: 04.07.2023
(51) Int. Cl.: B28B 1/24, B28B 7/34, B28B 11/24, B29C 33/52, B29C 45/44, B33Y 10/00, B33Y 30/00

(54) **CERAMIC INJECTION PROCESS FOR MANUFACTURING SPRAY NOZZLES USING THE WATER STOP TECHNIQUE**

(30) Priority: 12.07.2022 BR 102022013810
(71) Applicant: Spraying Systems Do Brasil Ltda, 09842-160 São Bernardo do Campo, SP (BR)
(72) Inventor: RIBEIRO DA ROCHA, Edson Francelin, São Bernardo do Campo, SP (BR)
(74) Representative: Clarke, Modet y Cía., S.L.

(57) **Abstract**

The present invention refers to the field of technologies related to injection processes for obtaining spray nozzles. More particularly, the present invention discloses a process for injecting ceramics (ceramic inserts) for manufacturing spray nozzles through the use of so-called water stop. The ceramic injection process using water stop was developed due to the need to manufacture ceramic parts (inserts for spray nozzles) with high dimensional accuracy and complex internal geometries. In order to make it possible to inject ceramics for the manufacture of spray nozzles using the water stop technique, it is necessary to divide the process into main steps such as: injection of the water stop in polymeric material, overinjecting of ceramics using the polymeric core and removing the core through chemical dissolution. In addition to secondary steps such as: chemical debinding or water debinding, thermal debinding and sintering.

## Description

### Field of the Invention:

The present invention refers to the field of technologies related to injection processes for obtaining spray nozzles. More particularly, the present invention discloses a process for injecting ceramics (ceramic inserts) for manufacturing spray nozzles through the use of so-called water stop.

### Background of the invention:

The traditional ceramic material injection process consists of using conventional molds, using dummy pins and closing pins to define the internal geometry of the part. However, this process has limitations that are mainly related to the details in both the external and internal shape of the ceramic parts.

The ceramic injection process using the water stop was developed through the need to inject ceramics (spray nozzle inserts) to manufacture parts with high dimensional accuracy and complex internal geometries.

### Brief description of the invention:

The present invention discloses a ceramic injection process (ceramic inserts) for manufacturing spray nozzles using the so-called water stop. In order to make it possible to inject the ceramic inserts of the spray nozzles using the water stop technique, it is necessary to divide the process into steps.

The main steps are:
- injecting the water stop in polymeric material;
- overinjecting ceramic using the polymer core; and
- removing core through chemical dissolution.

In order to obtain the ceramic part using the injection process using the water stop (insertion of spray nozzles), it is also necessary to carry out the following secondary steps:
- chemical debinding or water debinding;
- thermal debinding; and
- sintering.

### Brief description of the figures:

In order to obtain a complete visualization of the object of this invention, the figures of the present invention are presented in their preferred configuration:
Figures 1, 2 and 3 illustrate configurations of the core to be used in the part manufacturing process.
Figures 4 and 5 illustrate the ceramic injection into the core.
Figure 6 illustrates the polymeric cores inserted inside the ceramic injection molds.
Figures 7 and 8 illustrate the core rods mechanically cut in order to reduce as much as possible the amount of polymeric material to be dissolved.
Figure 9 illustrates the parts allocated in "cradles".
Figure 10 illustrates ultrasound equipment used in the dissolution process of the parts.
Figure 11 illustrates the parts being immersed in the solvent.
Figure 12 illustrates the pieces placed in perforated stainless steel trays.
Figure 13 illustrates the PP boxes positioned on shelves.
Figures 14, 15 and 16 illustrate some models of parts obtained after chemical dissolution.
Figure 17 illustrates the parts positioned inside the oven.
Figure 18 illustrates the parts with a brown visual appearance after the thermal debinding process.
Figure 19 illustrates the parts with a white visual appearance after the sintering process.

### Detailed description of the invention:

In order to be able to inject ceramics (ceramic inserts for spray nozzles) using the water stop technique, it is necessary to divide the process into steps. The main steps are:
- injecting the water stop in polymeric material;
- overinjecting ceramic using the polymer core; and
- removing core through chemical dissolution.

In order to obtain the ceramic part using the injection process using the water stop (insertion of spray nozzles), it is also necessary to carry out the following secondary steps:
- chemical debinding or water debinding;
- thermal debinding; and
- sintering.

### Detailed description of the main steps:

### 1) injection of the water stop in polymeric material:

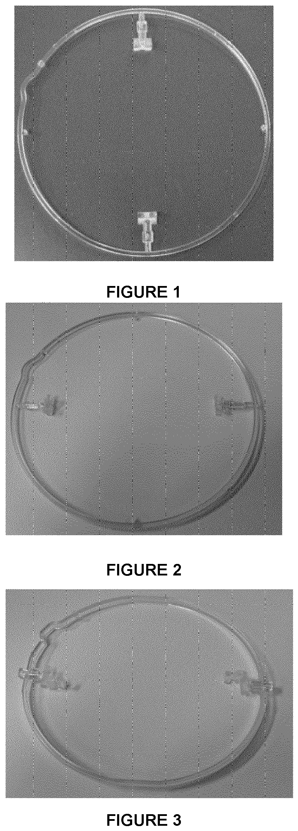

The injection of the water stop is made in polymeric material, as can be seen in figures 1, 2 and 3. Currently, molds with two cavities are used for the injection of cores, with the possibility of increasing the number of cavities as needed.

For the injection of cores in polymeric material, the technical data sheets of the materials and injectors are used.

### 2) Ceramic overiniecting using the polymeric core:

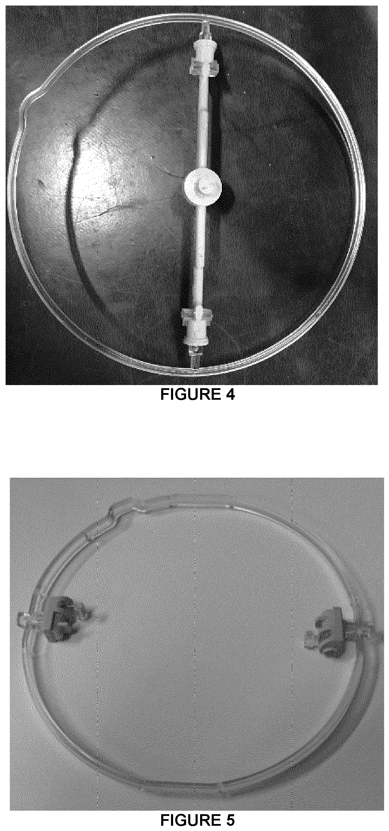

For the step of overinjecting the ceramic using the water stop polymeric, a feedstock of ceramic material is used, which allows the injection of the ceramic, as can be seen in figures 4 and 5.

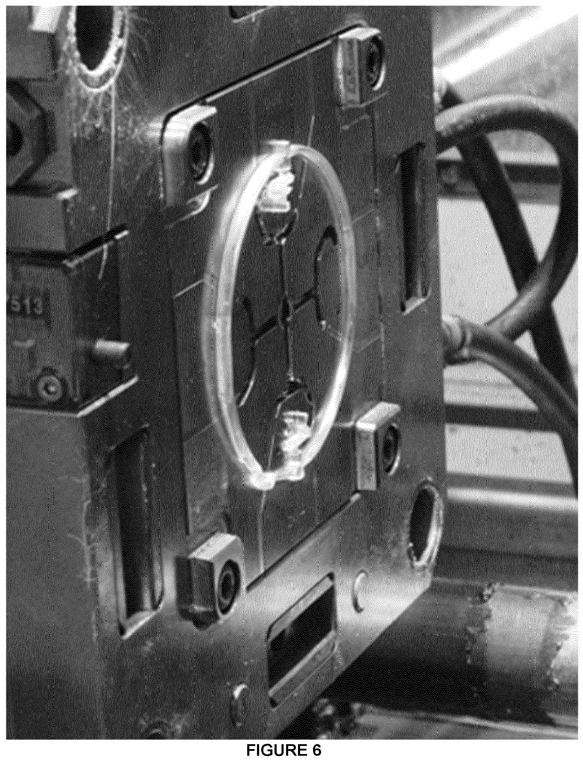

In order to make possible the overinjecting of the ceramic, the polymeric cores are inserted inside the ceramic injection molds, as shown in figure 6.

For the overinjecting of ceramics, the technical data sheets of the materials and injection machines are used.

### 3) Removal of the nucleus through chemical dissolution:

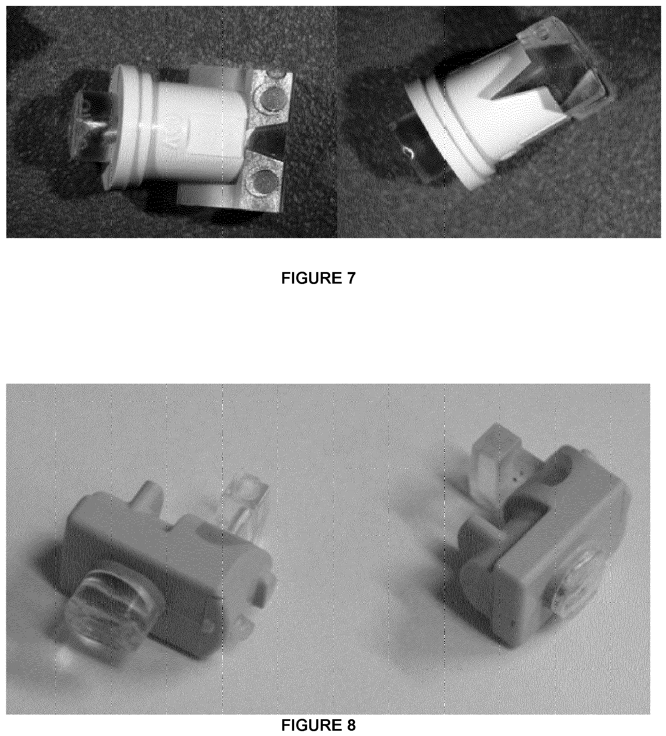

After performing the ceramic overinjecting step, the core rods are mechanically cut in order to reduce the amount of polymeric material to be dissolved as much as possible, as can be seen in figures 7 and 8.

For the chemical dissolution process of the polymeric cores, solvents are used to chemically dissolve the polymers.

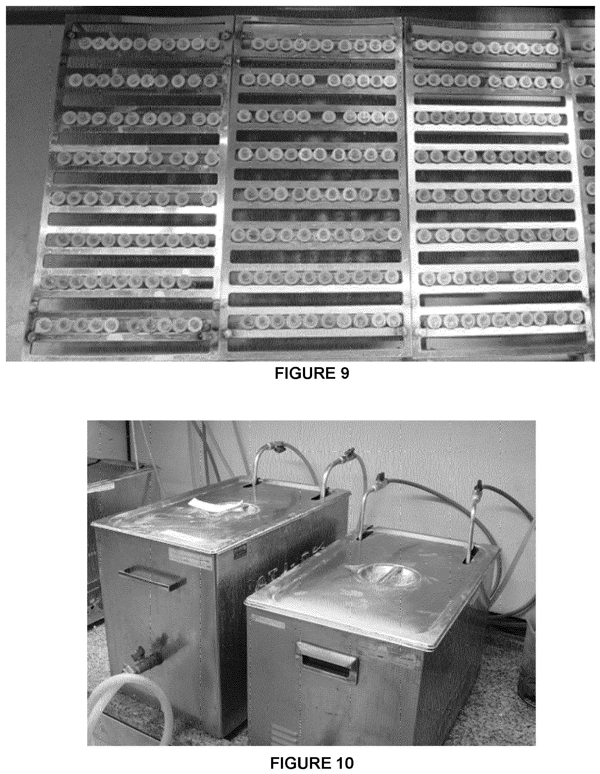

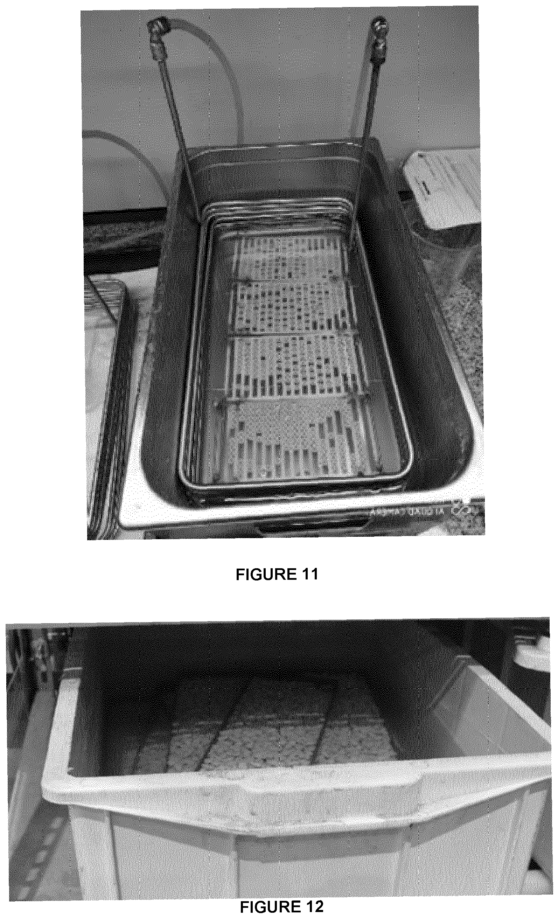

To optimize the dissolution process, the parts are placed in "cradles" as shown in figure 9. In addition, temperature-controlled ultrasound equipment is used, as shown in figure 10. Figure 11 shows the parts being dipped in the solvent. In the dissolution process, it must be ensured that 100% of the polymeric material has been removed.

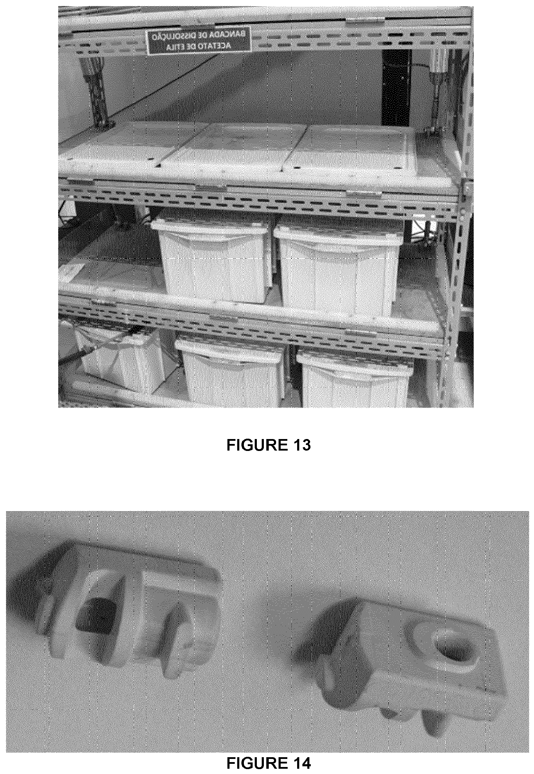

In another method used in the dissolution process using solvent, the parts are placed in perforated stainless steel trays, as can be seen in figure 12. Such trays are placed in polymeric boxes and are positioned on shelves which are constantly moved by pneumatic drive. Figure 13 shows the boxes positioned on the shelves. Thus, there is constant movement of the solvent at room temperature, ensuring the complete dissolution of the polymer.

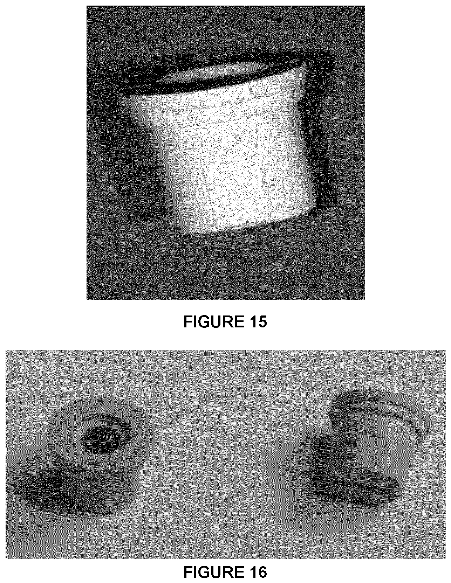

After the chemical dissolution process, it is possible to obtain the ceramic part (ceramic insert) from the spray nozzle in which the ceramic injection process was used, using the water stop polymer. Figures 14, 15 and 16 illustrate some models of parts obtained after chemical dissolution.

After this step, the ceramic parts follow the processes of chemical/water and thermal debinding and, later, the sintering process according to the data sheet of the feedstock used to finalize the production process. Such processes are carried out through the so-called secondary steps, which are common in the manufacture of industrial technical ceramic parts.

### Detailed description of the secondary steps:

### 4) Chemical debinding and water debinding - processes to start removing the feedstock binder:

In Water Debinding, parts are placed in perforated stainless steel trays and submerged in water at a specific temperature and time.

In chemical debinding, the parts are placed in stainless steel trays that are submerged in solvent at room temperature in boxes that are placed on shelves with pneumatic activation to move the solvent.

### 5) Thermal debinding (pre-sinter) - process to remove the binder from FEEDSTOCK.

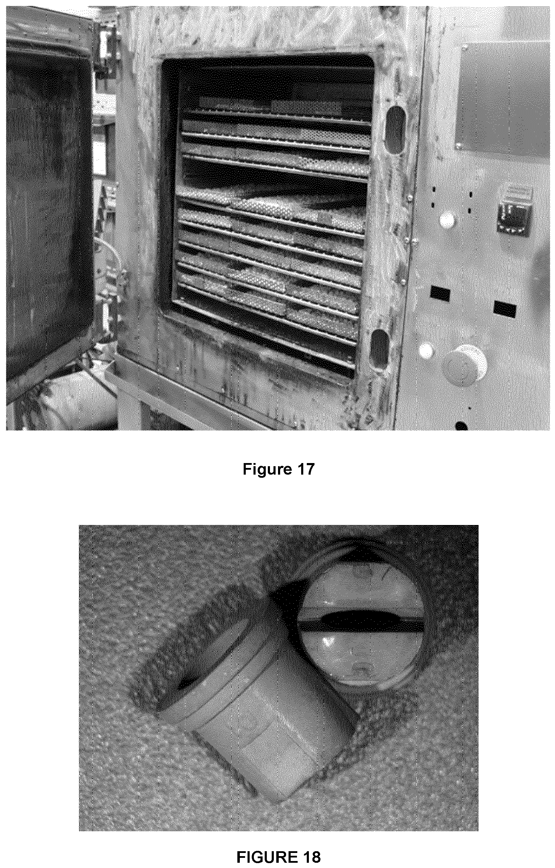

This process consists of heating the parts in an oven at around 300°C. Figure 17 shows the parts positioned inside the oven.

After the thermal debinding process (pre-sinter), the parts have a brown visual appearance, as shown in figure 18.

### 6) Sintering:

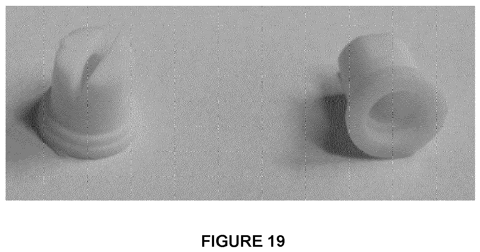

Sintering is the last stage of the ceramic production process, in which the objective is to sinter the ceramic It consists of a stage of heating the part in an oven at around 1600°C. After the sintering process, the parts look white, as shown in figure 19.

## Claims

1. Ceramic injection process for manufacturing spray nozzles using the water stop technique, the process **characterized by** comprising the following steps:
injecting the water stop in polymeric material;
overinjecting ceramic using the polymer core; and
removing core through chemical dissolution;
chemical debinding or water debinding;
thermal debinding; and
sintering.

2. Process, according to claim 1, **characterized by** the fact that the water stop injection step is made in polymeric material.

3. Process, according to claim 1, **characterized by** the fact that in the ceramic overinjecting step, feedstock of ceramic material is used.

4. Process, according to claim 1, **characterized by** the fact that in the ceramic overinjecting step, the polymeric cores are inserted inside the ceramic injection molds.

5. Process, according to claim 1, **characterized by** the fact that in the core removing step through chemical dissolution, the core rods are mechanically cut.

6. Process, according to claim 1, **characterized by** the fact that in the core removing step through chemical dissolution, solvents are used to chemically dissolve the polymer.

7. Process, according to claim 1, **characterized by** the fact that in the core removing step through chemical dissolution, the parts are placed in "cradles" and ultrasound equipment is used, with controlled temperature.

8. Process, according to claim 1, **characterized by** the fact that in the core removing step through chemical dissolution and during the dissolution process, the parts are placed in perforated stainless steel trays and these trays are placed in boxes and positioned on shelves which are constantly moved.

9. Process, according to claim 8, **characterized by** the fact that the movement of the shelves optimizes the dissolution process.

10. Process, according to claim 8, **characterized by** the fact that the movement of the shelves takes place by pneumatic actuation.

11. Process, according to claim 1, **characterized by** the fact that in the water debinding the parts are placed in perforated stainless steel trays and submerged in water with controlled temperature and time.

12. Process, according to claim 1, **characterized by** the fact that in the chemical debinding the parts are placed in stainless steel trays that are submerged in solvent at room temperature in boxes that are placed on shelves with pneumatic drive for solvent movement.

13. Process, according to claim 1, **characterized by** the fact that the thermal debinding consists of heating the parts in an oven at 300 °C.

14. Process, according to claim 1, **characterized by** the fact that sintering consists of heating the part in an oven at 1600 °C.
